# EUROPEAN PATENT APPLICATION

(11) **EP 4 848 865 A1**
(43) Date of publication of application: **02.12.2026**
(21) Application number: 25751339.0
(22) Date of filing: 24.01.2025
(51) Int. Cl.: H04W 72/231

(54) **COMMUNICATION METHOD, APPARATUS AND SYSTEM**

(30) Priority: 08.02.2024 CN 202410178014
(71) Applicant: Huawei Technologies Co., Ltd., Shenzhen, Guangdong 518129 (CN)
(72) Inventor: LI, Hao, Shenzhen, Guangdong 518129 (CN); PENG, Wenjie, Shenzhen, Guangdong 518129 (CN); FAN, Qiang, Shenzhen, Guangdong 518129 (CN); MA, Jianglei, Shenzhen, Guangdong 518129 (CN)
(74) Representative: Pfenning, Meinig & Partner mbB
(86) International application number: PCT/CN2025/074683
(87) International publication number: WO 2025/167737

(57) **Abstract**

This application provides a communication method, apparatus, and system. The method includes: receiving first information; and determining N pieces of configuration information in M pieces of configuration information based on the first information, where M is an integer greater than or equal to 1, N is a positive integer less than or equal to M, the M pieces of configuration information are pre-configured, and the M pieces of configuration information are used to determine a mode of the terminal device. The terminal device may perform selection from a plurality of pieces of pre-configured configuration information based on the first information, to perform reconfiguration. On one hand, the network device reconfigures the terminal device by transmitting the first information. Compared with a solution of transmitting complete configuration information, the foregoing solution can reduce resource overheads in the communication system and is more energy-saving. On the other hand, the determined configuration information may be used to determine the mode of the terminal device. Therefore, the first information may not carry information indicating mode transitions, to further reduce resource overheads in the communication system.

## Description

This application claims priority to Chinese Patent Application No. 202410178014.6, filed with the China National Intellectual Property Administration on February 8, 2024 and entitled "COMMUNICATION METHOD, APPARATUS, AND SYSTEM", which is incorporated herein by reference in its entirety.

### TECHNICAL FIELD

This application relates to the field of communication technologies, and more specifically, to a communication method, apparatus, and system.

### BACKGROUND

In communication systems, to enable network devices and terminal devices to perform operations related to radio resource control (radio resource control, RRC), the network devices need to send some information to the terminal devices. The information is referred to as system information (system information, SI). The SI may be classified into minimum system information (minimum SI, MSI) and other system information (other SI). The MSI may include basic information required for UE to initially access a cell and information required for obtaining any other system information.

However, the SI includes a large quantity of configuration items. In comparison with the SI, some configuration items in the MSI are reduced, but a large quantity of configuration items are still included. Consequently, a large quantity of physical resources need to be consumed to notify the terminal devices, and resource overheads are high.

Therefore, how to reduce the resource overheads in the communication systems is an urgent problem to be resolved.

### SUMMARY

This application provides a communication method, apparatus, and system, to reduce resource overheads in the communication system.

According to a first aspect, a communication method is provided. The method may be performed by a terminal device, may be performed by a component (for example, a processor, a chip, or a chip system) of a terminal device, or may be performed by a logic module or software that can implement all or some functions of a terminal device.

The method includes: receiving first information from a first network device; and determining N pieces of configuration information in M pieces of configuration information based on the first information, where M is an integer greater than or equal to 1, N is a positive integer less than or equal to M, the M pieces of configuration information are pre-configured, and the M pieces of configuration information are used to determine a mode of the terminal device.

According to the foregoing embodiment, the terminal device may perform selection from a plurality of pieces of pre-configured configuration information based on the first information from the network device, to perform reconfiguration. On one hand, the network device reconfigures the terminal device by transmitting the first information. Compared with a solution of transmitting complete configuration information, the foregoing embodiment can reduce resource overheads in a communication system and is more energy-saving. On the other hand, the determined configuration information may be used to determine the mode of the terminal device. Therefore, the first information may not carry information indicating mode transitions, to further reduce resource overheads in the communication system and save energy.

In some implementations, the first information indicates a first index, and the determining the N pieces of configuration information in the M pieces of configuration information based on the first information includes: determining the N pieces of configuration information in the M pieces of configuration information based on the first index.

According to the foregoing embodiment, the first information may indicate the index of the configuration information, and the terminal device may perform reconfiguration based on the configuration information corresponding to the index. An index occupies a small amount of data. Therefore, the foregoing solution can further reduce resource overheads in the communication system, to further save energy.

In some implementations, the first information indicates a first condition, and the determining the N pieces of configuration information in the M pieces of configuration information based on the first information includes: when the first condition is met, determining the N pieces of configuration information in the M pieces of configuration information.

According to the foregoing embodiment, for a specific scenario of the configuration information, the network device may define an application condition, namely, the first condition, corresponding to the configuration information. When the first condition is met, the terminal device may determine corresponding configuration information, and perform reconfiguration. In other words, the terminal device may activate a corresponding configuration when the application condition is met. On one hand, the terminal device can perform reconfiguration when the application condition is met, and the network device does not need to perform an additional indication, to reduce resource overheads. On the other hand, the terminal device can perform corresponding configuration in a proper situation, to avoid a case in which a configuration cannot be transited in time due to a signaling receiving failure, to avoid a failure rate.

In some implementations, the first information indicates a first index and a first condition, and the determining the N pieces of configuration information in the M pieces of configuration information based on the first information includes: determining K pieces of configuration information in the M pieces of configuration information based on the first index, and when the first condition is met, determining the N pieces of configuration information in the K pieces of configuration information, where K is a positive integer less than or equal to M, and K is a positive integer greater than or equal to N; or when the first condition is met, determining L pieces of configuration information in the M pieces of configuration information, and determining the N pieces of configuration information in the L pieces of configuration information based on the first index, where L is a positive integer less than or equal to M, and L is a positive integer greater than or equal to N.

According to the foregoing embodiment, the N pieces of configuration information determined by the terminal device meet the application condition of the configuration information, and are indicated by the network device via the index. In the foregoing solution, each set of configuration information can be applied in a more proper scenario, and the network device can indicate, via index information with a small data amount, a set (or sets) of configurations to be applied to the terminal device, to further help improve communication quality.

In some implementations, the first condition includes at least one of the following: a condition of an identifier of the terminal device; a condition of a capability category of the terminal device; a threshold condition of a distance between the terminal device and the first network device; a threshold condition of signal strength; a threshold condition of a battery level of the terminal device; a threshold condition of a quality of service level; a condition of a data encryption manner; a condition of a type of the first network device; or a condition of a sensing capability of the first network device.

According to the foregoing embodiment, the first condition may include at least one of the condition of the identifier of the terminal device, the condition of the capability category of the terminal device, the threshold condition of the distance between the terminal device and the first network device, the threshold condition of the signal strength, the threshold condition of the battery level of the terminal device, the threshold condition of the quality of service level, the condition of the data encryption manner, the condition of the type of the first network device, or the condition of the sensing capability of the first network device. The network device may define a more specific application condition for the configuration information, and the terminal device may select the configuration information based on the more specific application condition. Therefore, in the foregoing embodiment, a more specific application condition is used to more precisely trigger reconfiguration of the terminal device, so that each set of configuration information can be applied in a more proper scenario. This helps improve communication quality.

In some implementations, the method further includes: determining, based on the N pieces of configuration information, that the mode of the terminal device is a mode 1, where the mode 1 supports at least one of first data transmission, mobility management, or initiation of second data transmission, and a transmission requirement of the first data transmission is different from a transmission requirement of the second data transmission.

According to the foregoing embodiment, the N pieces of configuration information may be used to determine that the mode of the terminal device is the mode 1. Because the configuration information determined based on the first information may be used to determine the mode of the terminal device, the first information may not carry information indicating mode transitions, to further reduce resource overheads in the communication system.

In some implementations, the N pieces of configuration information include information about a first resource, and the method further includes: performing, on the first resource, the first data transmission with the first network device by using a non-orthogonal multiple access technology.

According to the foregoing embodiment, the network device may distinguish between data transmission of different terminal devices based on a non-orthogonal multiple access (non-orthogonal multiple access, NOMA) mechanism. In comparison with the first data transmission performed by using an orthogonal frequency-division multiple access (orthogonal frequency-division multiple access, OFDMA) technology, the network device and the terminal device in embodiments of this application occupy fewer resources when performing the first data transmission.

In some implementations, the method further includes: determining, based on the N pieces of configuration information, that the mode of the terminal device is a mode 2, where the mode 2 supports second data transmission.

According to the foregoing embodiment, the N pieces of configuration information may be used to determine that the mode of the terminal device is the mode 2. Because the configuration information determined based on the first information may be used to determine the mode of the terminal device, the first information may not carry information indicating mode transitions, to further reduce resource overheads in the communication system.

In some implementations, the method further includes: receiving second information from the first network device; and determining P pieces of configuration information in the M pieces of configuration information based on the second information, where P is a positive integer less than or equal to M, and the P pieces of configuration information are configuration information of a second network device.

According to the foregoing embodiment, the network device may send the second information to the terminal device, and the second information is used by the terminal device to determine configuration information of another network device. The foregoing embodiment may be applied to a mobility management scenario. For example, the first network device may be used as a source network device, and the second network device may be used as a target network device. Therefore, the source network device enables, based on the second information with a small data amount, the terminal device to complete reconfiguration of the target network device, to reduce resource overheads in mobility management.

In some implementations, the second information indicates a second index and/or a second condition.

According to the foregoing embodiment, the second information may indicate an index and/or an application condition of configuration information. The terminal device performs reconfiguration based on the configuration information corresponding to the index. This can further reduce resource overheads in the communication system, to further save energy. The terminal device uses the corresponding configuration information based on the application condition, so that each set of configuration information can be applied in a more proper scenario. This further helps improve communication quality.

In some implementations, one of the N pieces of configuration information includes information about a second resource, the second resource is used to transmit information for waking up the terminal device, and the receiving the second information from the first network device includes: receiving the second information from the first network device on the second resource.

According to the foregoing solution, the second information may be transmitted on the second resource used to transmit the information for waking up the terminal device, to improve utilization of the second resource and help save resources.

According to a second aspect, a communication method is provided. The method may be performed by a first network device, may be performed by a component (for example, a processor, a chip, or a chip system) in a first network device, or may be performed by a logic module or software that can implement all or some functions of a first network device.

The method includes: sending first information to a terminal device, where the first information is used to determine N pieces of configuration information in M pieces of configuration information, M is an integer greater than or equal to 1, N is a positive integer less than or equal to M, the M pieces of configuration information are pre-configured, and the M pieces of configuration information are used to transit a mode of the terminal device.

In some implementations, the first information indicates a first index, and the first index is used to determine the N pieces of configuration information in the M pieces of configuration information.

In some implementations, the first information indicates a first condition, and the first condition is used to determine the N pieces of configuration information in the M pieces of configuration information when the first condition is met.

In some implementations, the first information indicates a first index and a first condition. The first index is used to determine K pieces of configuration information in the M pieces of configuration information, and the first condition is used to determine the N pieces of configuration information in the K pieces of configuration information when the first condition is met, where K is a positive integer less than or equal to M, and K is a positive integer greater than or equal to N; or the first condition is used to determine L pieces of configuration information in the M pieces of configuration information when the first condition is met, and the first index is used to determine the N pieces of configuration information in the L pieces of configuration information, where L is a positive integer less than or equal to M, and L is a positive integer greater than or equal to N.

In some implementations, the first condition includes at least one of the following: a condition of an identifier of the terminal device; a condition of a capability category of the terminal device; a threshold condition of a distance between the terminal device and the first network device; a threshold condition of signal strength; a threshold condition of a battery level of the terminal device; a threshold condition of a quality of service level; a condition of a data encryption manner; a condition of a type of the first network device; or a condition of a sensing capability of the first network device.

In some implementations, the N pieces of configuration information are used to determine that the mode of the terminal device is a mode 1, the mode 1 supports at least one of first data transmission, mobility management, or initiation of second data transmission, and a transmission requirement of the first data transmission is different from a transmission requirement of the second data transmission.

In some implementations, the N pieces of configuration information include information about a first resource, and the method further includes: performing, on the first resource, the first data transmission with the terminal device by using a non-orthogonal multiple access technology.

In some implementations, the N pieces of configuration information are used to determine that the mode of the terminal device is a mode 2, and the mode 2 supports second data transmission.

In some implementations, the method further includes: sending second information to the terminal device, where the second information is used to determine P pieces of configuration information in the M pieces of configuration information, P is a positive integer less than or equal to M, and the P pieces of configuration information are configuration information of a second network device.

In some implementations, the second information indicates a second index and/or a second condition.

In some implementations, one of the N pieces of configuration information includes information about a second resource, the second resource is used to transmit information for waking up the terminal device, and the sending the second information to the terminal device includes: sending the second information to the terminal device on the second resource.

According to a third aspect, a communication apparatus is provided, and includes a processing circuit (or a processor) and an input/output interface (which may also be referred to as an interface circuit). The input/output interface is configured to input and/or output a signal, and the processing circuit is configured to perform the method in the first aspect and any possible implementation of the first aspect, or the processing circuit is configured to perform the method in the second aspect and any possible implementation of the second aspect.

In some implementations, the processing circuit is configured to communicate with another apparatus through the interface circuit, and perform the method in the first aspect and any possible implementation of the first aspect, or perform the method in the second aspect and any possible implementation of the second aspect.

According to a fourth aspect, a communication apparatus is provided. The communication apparatus may include a device, a module, or the like that is configured to perform functions of the communication apparatus.

In some implementations, the communication apparatus may include modules or units that one-to-one correspond to the methods/operations/steps/actions described in the first aspect and any possible implementation of the first aspect. The module or unit may be implemented by a hardware circuit, software, or a combination of the hardware circuit and the software.

In some implementations, the communication apparatus may include modules or units that one-to-one correspond to the methods/operations/steps/actions described in the second aspect and any possible implementation of the second aspect. The module or unit may be implemented by a hardware circuit, software, or a combination of the hardware circuit and the software.

According to a fifth aspect, a computer-readable storage medium is provided. The computer-readable storage medium stores a computer program or instructions. When the computer program or the instructions are run on a computer, the method in the first aspect and any possible implementation of the first aspect or the method in the second aspect and any possible implementation of the second aspect is performed.

According to a sixth aspect, a computer program product is provided, and includes a computer program or instructions. When the computer program or the instructions are run on a computer, the method in the first aspect and any possible implementation of the first aspect or the method in the second aspect and any possible implementation of the second aspect is performed.

According to a seventh aspect, a communication apparatus is provided, and includes a processor. The processor is configured to be connected to a memory, and configured to invoke a program stored in the memory, to perform the method in any possible implementation of the first aspect or the method in any possible implementation of the second aspect. The memory may be located inside or outside the communication apparatus. In addition, there are one or more processors.

In an implementation, the communication apparatus in the third aspect, the fourth aspect, or the seventh aspect may be a chip or a chip system.

According to an eighth aspect, a chip is provided, and includes a processor. This chip is configured to invoke a computer program or computer instructions in a memory, to enable the processor to perform any implementation of the first aspect or any implementation of the second aspect.

In some implementations, the processor is coupled to the memory through an interface.

According to a ninth aspect, a communication system is provided, and includes a terminal device and a first network device. The terminal device is configured to perform the first aspect and any possible implementation of the first aspect, and the first network device is configured to perform the second aspect and any possible implementation of the second aspect.

For descriptions of beneficial effect of any one of the second aspect to the ninth aspect, refer to descriptions of beneficial effect of the first aspect.

### BRIEF DESCRIPTION OF DRAWINGS

FIG. 1 is a diagram of a communication system to which an embodiment of this application is applicable;
FIG. 2 is a schematic flowchart of a communication method according to an embodiment of this application;
FIG. 3 is a schematic flowchart of another communication method according to an embodiment of this application;
FIG. 4A and FIG. 4B are diagrams of resource configurations according to an embodiment of this application;
FIG. 5 is a schematic flowchart of still another communication method according to an embodiment of this application;
FIG. 6 is a schematic flowchart of still another communication method according to an embodiment of this application;
FIG. 7 is a block diagram of a communication apparatus according to an embodiment of this application; and
FIG. 8 is a block diagram of another communication apparatus according to an embodiment of this application.

### DESCRIPTION OF EMBODIMENTS

The following describes technical solutions of this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the words such as "example" and "for example" mean giving an example, an illustration, or a description. Any embodiment or design scheme described as an "example" in this application should not be explained as being more preferred or having more advantages than another embodiment or design scheme. Exactly, the term "example" is for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that, as a new service scenario emerges, the technical solutions provided in embodiments of this application are also applicable to a similar technical problem.

Reference to "an embodiment", "some embodiments", or the like described in this specification means that a specific feature, structure, or characteristic described with reference to the embodiment is included in one or more embodiments of this application. Therefore, statements "in an embodiment", "in some embodiments", "in some other embodiments", "in some additional embodiments", and the like described in different parts in this specification do not necessarily refer to a same embodiment, but mean "one or more but not all embodiments", unless otherwise specifically emphasized in another manner. The terms "include", "contain", "have", and their variants all mean "including but not limited to", unless otherwise specifically emphasized in another manner.

The technical solutions in embodiments of this application may be applied to various communication systems, including but not limited to: a wireless local area network (wireless local area network, WLAN) communication system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a long term evolution (long term evolution, LTE) system, an LTE frequency division duplex (frequency division duplex, FDD) system, LTE time division duplex (time division duplex, TDD), a worldwide interoperability for microwave access (worldwide interoperability for microwave access, WiMAX) communication system, a 5th generation (5^{th} generation, 5G) mobile communication system or a new radio (new radio, NR) system, a narrowband Internet of things (narrowband Internet of things, NB-IoT) system, an enhanced machine-type communication (enhanced machine-type communication, eMTC) system, an enhanced mobile broadband (enhanced mobile broadband, eMBB) system, an ultra-reliable low-latency communication (ultra reliable low latency communication, URLLC) system, a satellite communication system or an LTE-machine-to-machine (LTE-machine-to-machine, LTE-M) system, a future 6th generation (6^{th} generation, 6G) mobile communication system, and the like.

It should be noted that, in embodiments of this application, the term "communication" may also be described as "data transmission", "signal transmission", "information transmission", "transmission", or the like. In embodiments of this application, the transmission may include sending or receiving. For example, the transmission may be uplink transmission. For example, a terminal device may send a signal to a network device. The transmission may alternatively be downlink transmission. For example, the network device may send a signal to the terminal device.

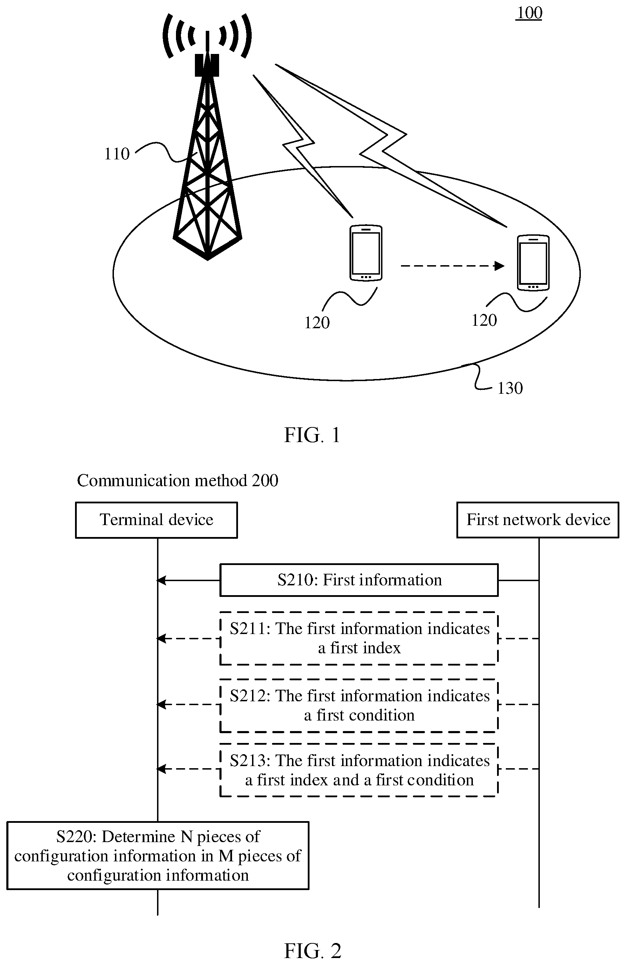

FIG. 1 is a diagram of a communication system to which an embodiment of this application is applicable. As shown in FIG. 1, a communication system 100 may include a plurality of communication devices, and the plurality of communication devices may perform wireless communication via air interface resources. The air interface resources may include at least one of a time domain resource, a frequency domain resource, a code resource, and a space resource. For example, the communication devices may include a network device 110 and a terminal device 120.

The network device 110 may be any device having a wireless transceiver function, for example, a base station configured to connect the terminal device 120 to a radio access network (radio access network, RAN). The base station may sometimes be referred to as an access network device or an access network node. It may be understood that in systems using different radio access technologies, names of devices having functions of the base station may be different. For ease of description, in this embodiment of this application, apparatuses that provide a wireless communication and access function for the terminal device are collectively referred to as a base station. In this embodiment of this application, the network device 110 includes but is not limited to a macro base station, a micro base station, a pico base station, a small cell, a balloon station, a relay station, an access point, and the like in various forms. The network device 110 may include an evolved NodeB (evolved NodeB, eNB or eNodeB), a radio network controller (radio network controller, RNC), a NodeB (NodeB, NB), a base station controller (base station controller, BSC), a base transceiver station (base transceiver station, BTS), a home evolved NodeB (home evolved NodeB, or home NodeB, HNB), or a baseband unit (base band unit, BBU) in LTE, or an access point (Access Point, AP), a wireless relay node, a wireless backhaul node, a transmission point (transmission point, TP), a transmission reception point (transmission reception point, TRP), or the like in a wireless fidelity (wireless fidelity, Wi-Fi) system; may further include a next generation NodeB (next generation node base station, gNB) or a transmission point (TRP or TP) in a 5G system, one or a group of (including a plurality of antenna panels) antenna panels of a base station in the 5G system, or a network node that forms a gNB or a transmission point, for example, a baseband unit (baseband unit, BBU) or a distributed unit (distributed unit, DU); and may further include a network device, a server, a wearable device, a vehicle-mounted device, or the like in a future 6G network. The network device 110 may alternatively be a module or unit that completes a part of functions of the base station, for example, may be a central unit (central unit, CU) or a distributed unit (distributed unit, DU).

The network device 110 may include a BBU and a remote radio unit (remote radio unit, RRU). The BBU and the RRU may be placed at different places. For example, the RRU may be remote and placed in a heavy-traffic area, and the BBU is placed in a central equipment room. The BBU and the RRU may alternatively be placed in a same place, for example, in a same equipment room. Alternatively, the BBU and the RRU may be different components at a same rack.

In embodiments of this application, an apparatus configured to implement a function of the network device 110 may be the network device 110, or may be an apparatus, for example, a chip system, that can support the network device 110 in implementing the function. The apparatus may be mounted in the network device 110. The chip system may include a chip, or may include a chip and another discrete component.

In another possible scenario, a plurality of network devices collaborate to assist a terminal in implementing radio access, and different network devices separately implement a part of functions of the base station. For example, the network device 110 may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. A specific technique and a specific device form that are used by the network device are not limited in embodiments of this application.

The terminal device 120 may be a device that provides voice and/or data connectivity for a user. The terminal device 120 may be deployed on land, including an indoor or outdoor terminal, a handheld terminal, or a vehicle-mounted terminal; or may be deployed on water (for example, on a ship); or may be deployed in the air (for example, on an aircraft, a balloon, or a satellite). The terminal device 120 may also be referred to as UE, an access terminal, a terminal, a subscriber unit (subscriber unit), a subscriber station, a mobile console, a mobile station (mobile station, MS), a mobile terminal (mobile terminal, MT), a remote station, a remote terminal, a mobile device, a user terminal, a wireless network device, a user agent, or a user apparatus. In embodiments of this application, the terminal device 120 includes but is not limited to: a cellular phone (cellular phone), a mobile phone (mobile phone), a wireless data card, a wireless modem (modem), a tablet computer (pad), a laptop computer (laptop computer), a computer having a wireless transceiver function, a cordless phone, a session initiation protocol (session initiation protocol, SIP) phone, a smartphone (smart phone), a wireless local loop (wireless local loop, WLL) station, a personal digital assistant (personal digital assistant, PDA), a handset (handset) having a wireless communication function, a compute device or another device connected to a wireless modem, a vehicle-mounted device, a wearable device, an uncrewed aerial vehicle device, a terminal device in the Internet of things or the Internet of vehicles, a terminal in any form in a future network, relay user equipment, a terminal in a future evolved public land mobile network (public land mobile network, PLMN), or the like. The terminal device 120 may alternatively be a virtual reality (virtual reality, VR) terminal device, an augmented reality (augmented reality, AR) terminal device, a machine type communication (machine type communication, MTC) terminal, a terminal device in industrial control (industrial control), a terminal device in self driving (self driving), a terminal device in telemedicine (remote medical), a terminal device in a smart grid (smart grid), a wireless terminal in transportation safety (transportation safety), a terminal device in a smart city (smart city), a terminal device in a smart home (smart home), a tactile terminal device, a vehicle-mounted terminal device, a wearable terminal device, or the like. This is not limited in this embodiment of this application.

In this embodiment of this application, the apparatus configured to implement a function of the terminal device 120 may be the terminal device 120, or may be an apparatus, for example, a chip system, that can support the terminal device 120 in implementing the function. The apparatus may be mounted in the terminal device 120. The chip system may include a chip, or may include a chip and another discrete component. In the technical solutions in embodiments of this application, an example in which an apparatus configured to implement a function of the terminal device is a terminal device, which may also be referred to as a terminal (terminal). The following uses an example in which the terminal device may be UE to describe the technical solutions provided in embodiments of this application.

It should be understood that FIG. 1 is merely a simplified diagram of an example for ease of understanding. The communication system 100 may further include another network device or another terminal device, which is not shown in FIG. 1.

The network device 110 may communicate with the terminal device 120 through a wireless link. A transmission link from the network device 110 to the terminal device 120 may be referred to as a downlink (downlink, DL) or a downlink channel, and is configured to transmit a downlink signal. A transmission link from the terminal device 120 to the network device 110 may be referred to as an uplink (uplink, UL) or an uplink channel, and is configured to transmit an uplink signal. For example, the network device 110 may send a downlink reference signal, for example, a cell-specific reference signal (cell-specific reference signal, CRS) or a UE-specific reference signal (UE-specific reference signal), to the terminal device 120 through a downlink channel, for channel state information measurement, data demodulation, beam training, time-frequency parameter tracking, and the like. The terminal device 120 may send an uplink reference signal, for example, an SRS or a DMRS, to the network device 110 through the uplink channel, to perform uplink/downlink channel measurement, data demodulation, and the like. The network device 110 and the terminal device 120 may further perform downlink data transmission through the downlink channel, and perform uplink data transmission through the uplink channel.

Wireless communication may also be performed between the network device 110 and another network device, and wireless communication may also be performed between the terminal device 120 and another terminal device.

In embodiments of this application, the network device 110 provides a service for a cell, and the terminal device 110 communicates with the network device 110 via a transmission resource (for example, a frequency domain resource or a spectrum resource) used by the cell, for example, a cell 130 shown in FIG. 1. The terminal device 110 is in a coverage area of the cell 130 (or a carrier). The network device 110 may be a macro base station, a micro base station, a relay station, an access point, or the like. The cell 130 may belong to a macro base station or belong to a base station corresponding to a small cell (small cell). The small cell herein may include a metro cell (metro cell), a micro cell (micro cell), a pico cell (pico cell), a femto cell (femto cell), and the like. The small cell is relative to a macro cell (macro cell). The macro cell usually has a large coverage area (for example, a radius of 500 meters or more) and high transmit power. The small cell is characterized by a small coverage area (for example, a radius of tens of meters) and low transmit power, and is suitable for providing a high-rate data transmission service. A quantity of cells that can be accessed by the terminal device 110 is not limited in this application, and one or more cells may provide services for the terminal device 110.

In a mobile communication system, when UE is powered on, the UE enters a startup and network connection procedure, which is mainly completed by a radio resource control (radio resource control, RRC) layer. Main functions of the RRC layer include broadcast of system information, paging, establishment, maintenance, or release of an RRC connection, security functions, establishment, reconfiguration, or release of radio bearers, mobility functions, quality of service (quality of service, QoS) management functions, terminal measurement and reporting, detection and recovery from a radio link failure, non-access stratum (non-access stratum, NAS) message forwarding, and the like. Operations at the RRC layer are guided by a state machine, and the state machine defines an RRC state that the UE may be in. When the UE is in different RRC states, a network side (for example, the network device) and the UE have different operations. When the UE enters different RRC states, detailed information needs to be configured on the network side to perform corresponding operations.

In an LTE communication system, RRC states may include an RRC connected (RRC_CONNECTED) state and an RRC idle (RRC_IDLE) state. The 5G NR system introduces a new RRC state name, that is, an RRC inactive (RRC_INACTIVE) state.

A state defined in 5G NR is used as an example. The UE is in the RRC_IDLE state when the UE is powered on, and the UE in the RRC_IDLE state may transit to the RRC_CONNECTED state. If there is no activity from the UE in short time, the UE in the RRC_IDLE state may transit to the RRC_INACTIVE state, to suspend a session between the UE and the network side. The UE in the RRC_INACTIVE state may transit to the RRC_CONNECTED state to resume a session. The UE in the RRC_CONNECTED or the RRC_INACTIVE state may enter the RRC_IDLE state by releasing a connection.

Operations of the UE in the RRC_IDLE state may include at least one of the following: public land mobile network (public land mobile network, PLMN) selection, broadcast of system information, cell re-selection, paging for mobile terminated data initiated by a 5G core network (5G core network, 5GC), discontinuous reception (discontinuous reception, DRX), for core network (core network, CN) paging, configured by an NAS, or the like.

Operations of the UE in the RRC_INACTIVE state may include at least one of the following: PLMN selection, broadcast of system information, cell re-selection, paging initiated by a next generation radio access network (next generation radio access network, NG-RAN) (RAN paging), RAN-based notification area (RAN-based notification area, RNA) managed by an NG-RAN, DRX for RAN paging configured by the NG-RAN, establishment of a connection from the NG-RAN to a 5GC (including a control plane and a user plane) for the UE, that access stratum (access stratum, AS) context, of the UE in the RRC_INACTIVE state, is stored in the NG-RAN and the UE, that the NG-RAN knows an RNA to which the UE belongs, or the like.

Operations of the UE in the RRC_CONNECTED state may include at least one of the following: establishment of a connection from an NG-RAN to a 5GC (including a control plane and a user plane) for the UE, that UE AS context is stored in the NG-RAN, that the NG-RAN knows a cell to which the UE belongs, transmission of unicast data with the UE, network-controlled mobility (for example, including measurement), or the like.

To enable the network device and the terminal device to perform the foregoing RRC-related operations, specific information needs to be obtained. The information is referred to as system information (system information, SI). On one hand, the SI includes a master information block (master information block, MIB) and several system information blocks (system information block, SIB).

The MIB may include cell barred status information and basic physical layer information of a cell required for further reception of system information, for example, a control resource set (control resource set, CORESET) #0 configuration. The MIB may be periodically broadcast by the network device through a broadcast channel (broadcast channel, BCH). In the several SIBs, a SIB1 defines scheduling of other SIBs. The SIB1 may include information required for initial access. The SIB 1 may also be referred to as remaining minimum system information (remaining minimum system information, RMSI), and is periodically broadcast through a DL-SCH or sent, in a dedicated manner through the DL-SCH, to the UE in the RRC_CONNECTED state.

On the other hand, the SI may be classified into minimum system information (minimum SI, MSI) and other system information (other SI). The minimum system information may include basic information required for the UE to initially access a cell and information required for obtaining any other system information. For example, the minimum system information may include the MIB and the SIB1.

The other system information may include all SIBs in the MSI that are not broadcast. These SIBs may be periodically broadcast through the downlink shared channel (downlink shared channel, DL-SCH) or broadcast through the DL-SCH on demand, for example, broadcast based on a request of the UE in the RRC_IDLE, RRC_INACTIVE, or RRC_CONNECTED state; or for another example, sent, in a dedicated manner through the DL-SCH, to the UE in the RRC_CONNECTED state.

For example, the following shows some other system information and brief descriptions.

A SIB2 may include cell re-selection information, and is mainly related to a serving cell.

A SIB3 may include information about a serving frequency and an intra-frequency neighboring cell related to cell re-selection. For example, the SIB3 may include a frequency-common cell re-selection parameter and a cell-specific re-selection parameter.

A SIB4 may include information about other NR frequencies and inter-frequency neighboring cells related to cell re-selection (including a frequency-common cell re-selection parameter and a cell-specific re-selection parameter). The information may also be used for NR measurement in an idle state.

A SIB5 may include information about evolved universal terrestrial radio access (evolved universal terrestrial radio access, E-UTRA) frequencies and E-UTRA neighboring cells related to cell re-selection. For example, the SIB5 may include a frequency-common cell re-selection parameter and a cell-specific re-selection parameter.

A SIB11 may include information related to idle or inactive measurement.

A SIB16 may include slice-based cell re-selection information.

A SIB 17 may include related information of a tracking reference signal (tracking reference signal, TRS) configuration of a user (or a terminal device) in an RRC_IDLE state or an RRC_INACTIVE state.

A SIBpos may include positioning assistance data defined in TS 37.355 and TS 38.331.

When the terminal device (or the user) needs to be handed over (handover, HO) from a current cell to a target cell, the current cell of the terminal device may configure the terminal device via an RRC reconfiguration (RRC Reconfiguration) message, so that the terminal device can access the target cell without reading system information. The RRC reconfiguration message may include an identifier of the target cell and all information required for accessing the target cell.

However, when the system information is large, the network device needs to transmit the system information in segments. Consequently, the configuration on the terminal device side does not take effect in time. In addition, the network device and the terminal device receive/send a large amount of system information, which is not conducive to energy saving. In addition, the network device may need to periodically send the system information, which further consumes resources and energy. Even if only the MSI (including the MIB and the SIBs) in the system message is used, the MIB and the SIBs also include a large quantity of configuration items. Consequently, a large quantity of physical resources need to be consumed to notify the terminal device, and resource overheads are high.

Therefore, how to reduce the resource overheads in the communication systems is an urgent problem to be resolved.

FIG. 2 is a schematic flowchart of a communication method 200 according to an embodiment of this application. The method 200 can reduce resource overheads in a communication system. The following describes the method 200 with reference to FIG. 2.

S210: A terminal device receives first information from a first network device. Correspondingly, the first network device sends the first information to the terminal device.

For descriptions of the terminal device, refer to the foregoing descriptions. Details are not described herein again. The first network device may be any network device. For descriptions of the network device, refer to the foregoing descriptions. Details are not described herein again.

Optionally, the first information is used to determine N pieces of configuration information in M pieces of configuration information. M may be an integer greater than or equal to 1. In other words, M≥1, M may be a positive integer greater than 0, and M may be a positive integer. N may be a positive integer less than or equal to M. In other words, M≥N, and N is an integer. For another understanding, the M pieces of configuration information are considered as a configuration information set, and the first information may be used to determine a universal set or a subset of the configuration information set.

There are a plurality of manners for determining the N pieces of configuration information in the M pieces of configuration information based on the first information. For example, the first information may indicate an index of the N pieces of configuration information, and the N pieces of configuration information are matched based on the index of the N pieces of configuration information. For another example, the first information may indicate a condition for selecting the configuration information, and the terminal device may select the N pieces of configuration information based on the condition. For details, refer to the following descriptions. Details are not described herein.

A name of the first information is not limited in this application. For example, the first information may be referred to as index information, indication information, condition information, trigger information, or another name.

Optionally, the M pieces of configuration information are pre-configured, that is, the M pieces of configuration information are standardized. For example, the M pieces of configuration information may be built in a memory of the terminal device when the terminal device is delivered from a factory. For another example, M pieces of configuration information are specified in a protocol or a standard. When the terminal device uses the protocol or the standard, the M pieces of configuration information are pre-configured. For another example, the network device (for example, the first network device or another network device) sends the M pieces of configuration information to the terminal device before S210.

Optionally, the M pieces of configuration information are used to determine a mode of the terminal device.

In an optional embodiment, the mode of the terminal device may include the RRC_IDLE state, the RRC_INACTIVE state, or the RRC_CONNECTED state. The M pieces of configuration information may be used to determine whether the terminal device is in the RRC_IDLE state, the RRC_INACTIVE state, or the RRC_CONNECTED state. For example, configuration information #1 may be used to determine that the terminal device is in the RRC_IDLE state.

It should be noted that, in a related technical solution, the network device determines a state of the terminal device via RRC signaling. Specifically, the RRC signaling indicates the terminal device to transit a state. In this embodiment of this application, the mode of the terminal device is determined based on the pre-configured configuration information, which is completely different from the related technical solution. In addition, configuration information in the related technical solution is carried in RRC signaling. However, the configuration information in this application is pre-configured, which is completely different from the related technical solution.

In another optional embodiment, an RRC layer has a protocol framework in only one state, and this protocol framework is referred to as a single RRC state (single RRC state) protocol framework. For example, the single RRC state protocol framework may be applied to a 6G wireless communication system.

A single RRC state may correspond to a plurality of modes, and different modes correspond to different transmission requirements and/or different phases of the terminal device.

Optionally, the transmission requirement is associated with at least one transmission performance indicator. Optionally, different requirements for transmission performance indicators may correspond to different transmission requirements. In other words, different transmission requirements may be distinguished based on different requirements for transmission performance indicators. For example, the transmission performance indicators may include an amount of transmitted data, a transmission latency, a packet loss, or jitter.

For example, based on different requirements for the amount of transmitted data, the transmission requirements may be classified into no data transmission requirement, a requirement for small-amount data transmission, and a requirement for large-amount data transmission. For another example, based on different requirements for the transmission latency, transmission requirements may be classified into an ultra-low latency requirement, a low latency requirement, a general latency requirement, and no latency requirement. For another example, based on different requirements for the packet loss during transmission, the transmission requirements may be classified into a requirement for an ultra-low packet loss rate (or quantity of lost packets), a requirement for a low packet loss rate (or quantity of lost packets), a requirement for a general packet loss rate (or quantity of lost packets), and a requirement for a zero packet loss rate (or quantity of lost packets). For another example, based on different requirements for jitter during transmission, the transmission requirements may be classified into a requirement for an ultra-low jitter value, a requirement for a low jitter value, a requirement for a general jitter value, and no jitter value requirement. It should be noted that the transmission performance indicators are not limited to the foregoing content, and may further include another indicator.

Optionally, the transmission requirements are associated with different transmission features. For example, the transmission features may include dynamic scheduling or semi-persistent scheduling. It should be noted that the transmission features are not limited to the foregoing content, and may further include another feature.

For example, phases of the terminal device may include a power-on phase, an initialization phase, a data transmission phase (for example, a phase without traffic transmission, a small data transmission phase, or a large-amount data transmission phase), a sleep phase, or the like. It should be noted that the phases of the terminal device are not limited to the foregoing content, and may further include another phase.

For example, after power-on and initialization are completed, the terminal device enters a single operating state (namely, the single RRC state). The following describes examples of several modes of the terminal device in the single RRC state.

A mode 0 is a state of the terminal device in the initialization phase. In the mode 0, the communication system (including the terminal device and the network device) may complete initialization operations such as initial network selection, terminal device registration, authentication, or security negotiation. The mode 0 may have another name, for example, a mode (mode) 0, an initialized mode, or another name. A name of the mode 0 is not limited in this application.

A mode 1 is a state of the terminal device in the phase without traffic transmission or the small data transmission phase. Alternatively, the mode 1 may be a state, of the terminal device, corresponding to a transmission requirement that has no data transmission requirement and a requirement for small-amount data transmission. In the mode 1, the communication system (including the terminal device and the network device) may perform specific (specific) configurations of different terminal devices, mobility management of the terminal device, initiation of uplink and/or downlink data transmission (for example, initiation of transmission of a large amount of uplink and/or downlink data), or the like. The mode 1 may have another name, for example, a default mode (default mode), an inactive (inactive) mode, a low data amount mode, or another name. A name of the mode 1 is not limited in this application.

A mode 2 is a state of the terminal device in the large-amount data transmission phase. Alternatively, the mode 2 may be a state, of the terminal device, corresponding to a transmission requirement that has a requirement for large-amount data transmission. In the mode 2, the communication system (including the terminal device and the network device) may perform a dedicated configuration of the terminal device, invoke a capability of the terminal device that is stronger than that in the mode 1, perform traffic data transmission with higher QoS guarantee than that in the mode 1, or the like. The mode 2 may have another name, for example, an enhanced mode (enhanced mode), a configurable (configurable) mode, a large data amount mode, or another name. A name of the mode 2 is not limited in this application.

It should be noted that modes of the terminal device are not limited to the foregoing three modes, and may further have another mode. This is not limited in this application.

The M pieces of configuration information are used to determine the mode of the terminal device. In a possible implementation, the M pieces of configuration information are used to transit the mode of the terminal device. For example, the mode of the terminal device is originally the mode 1, and the M pieces of configuration information correspond to the mode 2, the mode of the terminal device may be transited to the mode 2 based on the M pieces of configuration information. In another possible implementation, the M pieces of configuration information are used to maintain the mode of the terminal device. For example, the mode of the terminal device is originally the mode 2, and the M pieces of configuration information correspond to the mode 2, the mode of the terminal device may be maintained in the mode 2 based on the M pieces of configuration information.

S220: The terminal device determines the N pieces of configuration information in the M pieces of configuration information based on the first information.

For descriptions of M, the M pieces of configuration information, N, and the N pieces of configuration information, refer to the foregoing descriptions of S210. Details are not described herein again.

There may be a plurality of manners in which the terminal device determines the N pieces of configuration information in the M pieces of configuration information based on the first information. For example, the first information may indicate an index of the N pieces of configuration information. In this case, the terminal device may match the N pieces of configuration information based on the index of the N pieces of configuration information. For another example, the first information may indicate a condition for selecting the configuration information. In this case, the terminal device may select the N pieces of configuration information based on the condition. For details, refer to the following descriptions. Details are not described herein.

Optionally, the M pieces of configuration information are pre-configured. For details, refer to the foregoing descriptions of S210. Details are not described herein again.

Optionally, the M pieces of configuration information are used to determine a mode of the terminal device. For details, refer to the foregoing descriptions of S210. Details are not described herein again.

According to the foregoing embodiment, the terminal device may perform selection from a plurality of pieces of pre-configured configuration information based on the first information from the network device, to perform reconfiguration. On one hand, the network device reconfigures the terminal device by transmitting the first information. Compared with a solution of transmitting complete configuration information, the foregoing embodiment can reduce resource overheads in a communication system and is more energy-saving. On the other hand, the determined configuration information may be used to determine the mode of the terminal device. Therefore, the first information may not carry information indicating mode transitions, to further reduce resource overheads in the communication system and save energy.

Optionally, S210 includes: (S211) The first network device sends the first information to the terminal device, where the first information indicates a first index.

The first information may indicate the first index. Optionally, the first information may include the first index. In this case, the terminal device may determine the first index based on content in the first information. For example, the first information includes an index #0, and the terminal device may determine the index #0 based on content in the first information. Optionally, the first information may indicate an identifier of the first index. In this case, the terminal device may determine the first index based on the identifier of the first index and a predefined rule. For example, the first index is an index #0, and an identifier of the index #0 is an identifier #0. The terminal device may determine, in a predefined mapping table between an identifier and an index based on the identifier #0, that the identifier #0 is the identifier of the index #0, to determine the index #0.

Optionally, S220 includes: The terminal device determines the N pieces of configuration information in the M pieces of configuration information based on the first index.

Optionally, the first index may correspond to the N pieces of configuration information. In a possible implementation, the first index is an index (index) of the N pieces of configuration information. The terminal device may determine, from the M pieces of pre-configured configuration information based on the first index, the N pieces of configuration information corresponding to the first index. For example, the first index is an index #0, and the index #0 is an index of configuration information #0 to configuration information #3 (four pieces of configuration information in total). In this case, the terminal device may determine the configuration information #0 to the configuration information #3 based on the index #0. In another possible implementation, the first index is an index of one of the N pieces of configuration information. For example, the first index is an index #0, and the index #0 is an index of configuration information #0. In this case, the terminal device may determine the configuration information #0 based on the index #0. For example, the terminal device may further determine the configuration information #1 to the configuration information #3 according to a predefined rule or another indication. For example, the N pieces of configuration information are predefined to include configuration information corresponding to an index, and three pieces of adjacent configuration information after the configuration information. For another example, the first information includes an offset, and the offset is 3, and indicates that three pieces of adjacent configuration information after the configuration information also belong to the N pieces of configuration information.

Optionally, the method 200 further includes: The network device determines the first index corresponding to the N pieces of configuration information. Optionally, the method 200 further includes: The network device determines the N pieces of configuration information. Optionally, the method 200 further includes: The network device determines the N pieces of configuration information, and determines the first index corresponding to the N pieces of configuration information.

Optionally, the first information may be carried in an SIB message. For example, the network device sends the SIB message to the terminal device. The SIB message includes the first information, and the first information indicates the first index. It should be noted that, in this application, that the first information needs to be carried in the SIB message is not limited, and the first information may alternatively be carried in another message. For example, when the communication system performs initialization operations such as initial network selection, terminal device registration, authentication, or security negotiation, the first information may be carried in a message sent by the network device to the terminal device.

A sending form of the first information is not limited in this application. For example, the first information may be broadcast to the terminal device. For another example, the first information may be sent to the terminal device in a unicast manner.

According to the foregoing embodiment, the first information may indicate the index of the configuration information, and the terminal device may perform reconfiguration based on the configuration information corresponding to the index. An index occupies a small amount of data. Therefore, the foregoing solution can further reduce resource overheads in the communication system, to further save energy.

Optionally, S210 includes: (S212) The first network device sends the first information to the terminal device, where the first information indicates a first condition.

The first information may indicate the first condition. Optionally, the first information may include the first condition. In this case, the terminal device may determine the first condition based on content in the first information. For example, the first information includes a condition #1, and the terminal device may determine the condition #1 based on content in the first information. Optionally, the first information may indicate an identifier of the first condition. In this case, the terminal device may determine the first condition based on the identifier of the first condition and a predefined rule. For example, the first condition is a condition #1, and an identifier of the condition #1 is an identifier #1. The terminal device may determine, in a predefined mapping table between an identifier and a condition based on the identifier #1, that the identifier #1 is the identifier of the condition #1, to determine the condition #1.

Optionally, S220 includes: The terminal device determines the N pieces of configuration information in the M pieces of configuration information when the first condition is met.

Optionally, the first condition may correspond to the N pieces of configuration information. In a possible implementation, the first condition is an application condition of the N pieces of configuration information. Therefore, when the first condition is met, the terminal device may determine, from the M pieces of pre-configured configuration information, the N pieces of configuration information corresponding to the first condition. For example, the first condition is that a capability category of the terminal device is a category #1, and the first condition corresponds to configuration information #0 to configuration information #3. In this case, when the capability category of the terminal device is the category #1, the configuration information #0 to the configuration information #3 are determined.

Optionally, the first information may indicate a plurality of conditions, and the first condition is one of the plurality of conditions. Optionally, when at least one of the plurality of conditions is met, the terminal device determines one or more pieces of configuration information, corresponding to the at least one condition, in the M pieces of configuration information. For example, the plurality of conditions include a condition #1, and the condition #1 corresponds to configuration information #0 to configuration information #3. The plurality of conditions include a condition #2, and the condition #2 corresponds to configuration information #4 to configuration information #6. It is assumed that the condition #1 is that a capability category of the terminal device is a category #1, and the condition #2 is that the capability category of the terminal device is a category #2. Therefore, when the capability category of the terminal device is the category #1, the terminal device performs reconfiguration based on the configuration information #0 to the configuration information #3. When the capability category of the terminal device is the category #2, the terminal device performs reconfiguration based on the configuration information #4 to the configuration information #6. It should be noted that content of the first condition or the plurality of conditions is not limited to the capability category of the terminal device, and the foregoing is merely an example. For more descriptions of the first condition or the plurality of conditions, refer to the following descriptions. Details are not described herein.

In some other optional embodiments, a condition other than the first condition in the plurality of conditions is not indicated by the first information. In other words, different conditions may be indicated by different information.

Optionally, the method 200 further includes: The network device determines the first condition corresponding to the N pieces of configuration information. Optionally, the method 200 further includes: The network device determines the N pieces of configuration information. Optionally, the method 200 further includes: The network device determines the N pieces of configuration information, and determines the first condition corresponding to the N pieces of configuration information.

When the first information indicates the first condition, the first information may be carried in any message. This is not limited in this application. In an example, the first information may be carried in any message sent by the network device to the terminal device in the mode 0. For example, when the communication system performs initialization operations such as initial network selection, terminal device registration, authentication, or security negotiation, the first information may be carried in a message sent by the network device to the terminal device. In another example, the first information is carried in an SIB message sent by the network device to the terminal device.

According to the foregoing embodiment, for a specific scenario of the configuration information, the network device may define an application condition, namely, the first condition, corresponding to the configuration information. When the first condition is met, the terminal device may determine corresponding configuration information, and perform reconfiguration. In other words, the terminal device may activate a corresponding configuration when the application condition is met. On one hand, the terminal device can perform reconfiguration when the application condition is met, and the network device does not need to perform an additional indication, to reduce resource overheads. On the other hand, the terminal device can perform corresponding configuration in a proper situation, to avoid a case in which a configuration cannot be transited in time due to a signaling receiving failure, to avoid a failure rate.

Optionally, in some other implementation scenarios of the foregoing embodiments, the first condition includes at least one of the following: a condition of an identifier of the terminal device; a condition of the capability category of the terminal device; a threshold condition of a distance between the terminal device and the first network device; a threshold condition of signal strength; a threshold condition of a battery level of the terminal device; a threshold condition of a QoS level; a condition of a data encryption manner; a condition of a type of the first network device; or a condition of a sensing capability of the first network device.

Optionally, the first condition includes the condition of the identifier of the terminal device. Optionally, the condition of the identifier of the terminal device may include a condition of at least 1 bit of the identifier of the terminal device. For example, a last bit of the identifier of the terminal device is 1. When the last bit of the identifier of the terminal device is 1, the terminal device may determine the N pieces of configuration information corresponding to the first condition.

Optionally, the first condition includes the condition of the capability category of the terminal device. For example, the capability category of the terminal device is a category (category) #1. When the capability category of the terminal device is the category #1, the terminal device may determine the N pieces of configuration information corresponding to the first condition.

Optionally, the first condition includes the threshold condition of the distance between the terminal device and the first network device. For example, the first condition is that the distance is less than or equal to a preset threshold. When the distance between the terminal device and the first network device is less than or equal to the preset threshold, the terminal device determines the N pieces of configuration information corresponding to the first condition. For another example, the first condition is that the distance is within a preset threshold range. When the distance between the terminal device and the first network device falls within the preset threshold range, the terminal device determines the N pieces of configuration information corresponding to the first condition.

Optionally, the first condition includes the threshold condition of the signal strength. For example, the first condition is that the signal strength is less than or equal to a preset threshold. When the signal strength is less than or equal to the preset threshold, the terminal device determines the N pieces of configuration information corresponding to the first condition. For another example, the first condition is that the signal strength is within a preset threshold range. When the signal strength falls within the preset threshold range, the terminal device determines the N pieces of configuration information corresponding to the first condition.

Optionally, the first condition includes the threshold condition of the battery level of the terminal device. For example, the first condition is that the battery level of the terminal device is less than or equal to a preset threshold. When the battery level of the terminal device is less than or equal to the preset threshold, the terminal device determines the N pieces of configuration information corresponding to the first condition. For another example, the first condition is that the battery level of the terminal device is within a preset threshold range. When the battery level of the terminal device falls within the preset threshold range, the terminal device determines the N pieces of configuration information corresponding to the first condition.

Optionally, the first condition includes the threshold condition of the QoS level. For example, the first condition is that the QoS level is less than or equal to a preset threshold. When the QoS level is less than or equal to the preset threshold, the terminal device determines the N pieces of configuration information corresponding to the first condition. For another example, the first condition is that the QoS level is equal to one or more preset thresholds. When the QoS level is equal to the one or more preset thresholds, the terminal device determines the N pieces of configuration information corresponding to the first condition. For still another example, the first condition is that the QoS level is within a preset threshold range. When the QoS level falls within the preset threshold range, the terminal device determines the N pieces of configuration information corresponding to the first condition.

Optionally, the first condition includes the condition of the data encryption manner. For example, the data encryption manner is a data encryption manner #1. When the data encryption manner is the data encryption manner #1, the terminal device may determine the N pieces of configuration information corresponding to the first condition.

Optionally, the first condition includes the condition of the type of the first network device. For example, the type of the first network device may include a macro base station, a micro base station, a pico base station, or a femto base station. For another example, the type of the first network device may include a 3G base station, a 4G base station, a 5G base station, or a 6G base station. For another example, the type of the first network device may include a RAN or an O-RAN. The type of the first network device may also be referred to as a base station specification. For example, the first condition includes that the type of the first network device is a type #1. When the type of the first network device is the type #1, the terminal device may determine the N pieces of configuration information corresponding to the first condition.

Optionally, the first condition includes the condition of the sensing capability of the first network device. For example, when the sensing capability of the first network device is a capability #1, the terminal device may determine the N pieces of configuration information corresponding to the first condition. For another example, when the sensing capability of the first network device is strong (weak), the terminal device may determine the N pieces of configuration information corresponding to the first condition. For another example, the condition of the sensing capability of the first network device includes a threshold or a threshold range of the sensing capability. When the sensing capability of the first network device meets the threshold or the threshold range of the sensing capability, the terminal device may determine the N pieces of configuration information corresponding to the first condition.

It should be noted that the foregoing is an example in which the first condition includes the condition of the identifier of the terminal device, the condition of the capability category of the terminal device, the threshold condition of the distance between the terminal device and the first network device, the threshold condition of the signal strength, the threshold condition of the battery level of the terminal device, the threshold condition of the QoS level, the condition of the data encryption manner, the condition of the type of the first network device, or the condition of the sensing capability of the first network device. In other words, the foregoing is an example in which the first condition includes a condition in a specific aspect. However, in this application, that the first condition includes only a condition in one aspect is not limited, and the first condition may further include conditions in a plurality of aspects.

In an example, the first condition includes the threshold range of the QoS level and the threshold of the battery level of the terminal device. For example, when the QoS level is within the threshold range of the QoS level, and the battery level of the terminal device is greater than the threshold of the battery level of the terminal device, the terminal device may determine the N pieces of configuration information corresponding to the first condition.

In another example, the first condition includes the condition of the threshold of the QoS level and the identifier of the terminal device. For example, when the QoS level is equal to the threshold of the corresponding QoS level, and the last bit of the identifier of the terminal device meets the condition of the identifier of the terminal device, the terminal device may determine the N pieces of configuration information corresponding to the first condition.

In embodiments of this application, the first condition includes examples in a plurality of aspects, and may be any combination of the foregoing examples in a specific aspect. More combinations are not described.

Optionally, the first information includes a plurality of conditions, and the first condition is one of the plurality of conditions. Any one of the plurality of conditions may include at least one of the following: the condition of the identifier of the terminal device; the condition of the capability category of the terminal device; the threshold condition of the distance between the terminal device and the first network device; the threshold condition of the signal strength; the threshold condition of the battery level of the terminal device; the threshold condition of the quality of service level; the condition of the data encryption manner; the condition of the type of the first network device; or the condition of the sensing capability of the first network device. For an example of a condition other than the first condition in the plurality of conditions, refer to the descriptions of the first condition. Details are not described herein again.

According to the foregoing embodiment, the first condition may include at least one of the condition of the identifier of the terminal device, the condition of the capability category of the terminal device, the threshold condition of the distance between the terminal device and the first network device, the threshold condition of the signal strength, the threshold condition of the battery level of the terminal device, the threshold condition of the quality of service level, the condition of the data encryption manner, the condition of the type of the first network device, or the condition of the sensing capability of the first network device. The network device may define a more specific application condition for the configuration information, and the terminal device may select the configuration information based on the more specific application condition. Therefore, in the foregoing embodiment, a more specific application condition is used to more precisely trigger reconfiguration of the terminal device, so that each set of configuration information can be applied in a more proper scenario. This helps improve communication quality.

Optionally, S210 includes: (S213) The first network device sends the first information to the terminal device, where the first information indicates a first index and a first condition.

The first information may indicate the first index and the first condition. Optionally, the first information includes the first index and the first condition. Optionally, the first information indicates an identifier of the first index, and the first information includes the first condition. Optionally, the first information includes the first index, and the first information indicates an identifier of the first condition. Optionally, the first information indicates an identifier of the first index and an identifier of the first condition. For details, refer to the foregoing related descriptions of S211 and S212. Details are not described herein again.

Optionally, in some other implementation scenarios of the foregoing embodiments, S220 includes: The terminal device determines K pieces of configuration information in the M pieces of configuration information based on the first index, and when the first condition is met, determines the N pieces of configuration information in the K pieces of configuration information, where K is a positive integer less than or equal to M, and K is a positive integer greater than or equal to N.

It may be understood that the terminal device may determine, based on the first index, the configuration information corresponding to the first index; and then determine, based on the first condition, the configuration information that meets the first condition in the configuration information corresponding to the first index.

Optionally, in some other implementation scenarios of the foregoing embodiments, S220 includes: When the first condition is met, the terminal device determines L pieces of configuration information in the M pieces of configuration information, and determines the N pieces of configuration information in the L pieces of configuration information based on the first index, where L is a positive integer less than or equal to M, and L is a positive integer greater than or equal to N.

It may be understood that the terminal device may determine, from the M pieces of configuration information, the configuration information that meets the first condition; and then determine the configuration information corresponding to the first index in the configuration information that meets the first condition.

According to the foregoing embodiment, the N pieces of configuration information determined by the terminal device meet the application condition of the configuration information, and are indicated by the network device via the index. In the foregoing solution, each set of configuration information can be applied in a more proper scenario, and the network device can indicate, via index information with a small data amount, a set (or sets) of configurations to be applied to the terminal device, to further help improve communication quality.

Optionally, the first information includes Q pieces of configuration information, where Q may be a positive integer. For the Q pieces of configuration information, refer to the current configuration information, for example, configuration information in the current SIB message. In other words, in addition to the first index and/or the first condition that are/is used to determine the N pieces of configuration information from the M pieces of pre-configured (or standardized) configuration information, the first information may further include specific configuration information, or configuration information that is not pre-configured. When the first information includes the Q pieces of configuration information, the terminal device may obtain more configuration information, and the configuration is more flexible.

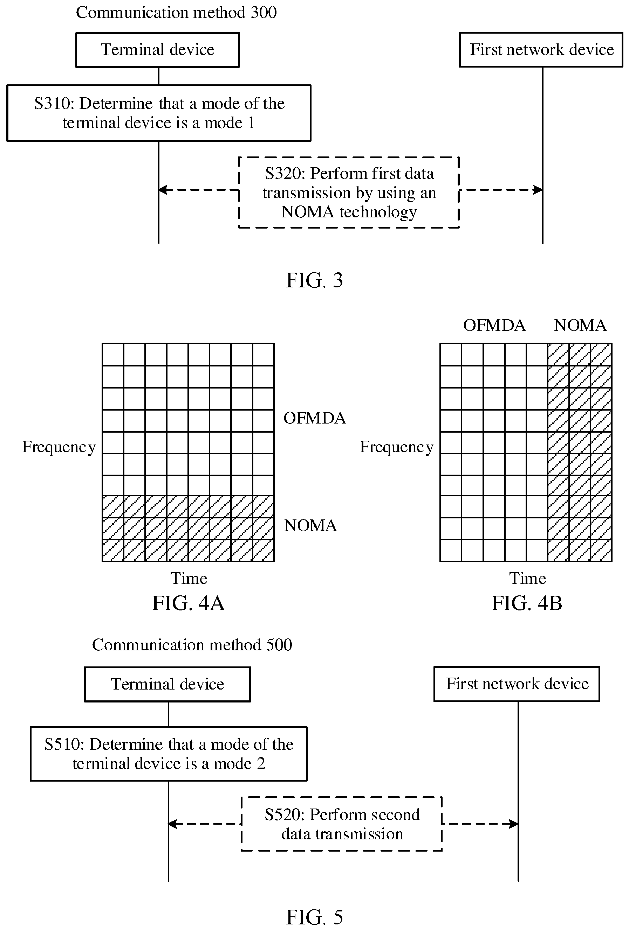

FIG. 3 is a schematic flowchart of another communication method 300 according to an embodiment of this application. The method 300 may be combined with any embodiment of the method 200. For example, the method 300 may be performed after the method 200.

The method 300 includes S310. Optionally, the method 200 includes S310.

S310: A terminal device determines, based on N pieces of configuration information, that a mode of the terminal device is a mode 1.

The mode 1 may support at least one of first data transmission, mobility management, or initiation of second data transmission, and a transmission requirement of the first data transmission is different from a transmission requirement of the second data transmission.

The transmission requirement of the first data transmission is different from the transmission requirement of the second data transmission. Optionally, the transmission requirement of the first data transmission is small-amount data transmission. For example, the first data transmission may be small data transmission (small data transmission, SDT). Optionally, the transmission requirement of the second data transmission is large data transmission. For example, the second data transmission may be traffic data transmission.

For other descriptions of the mode 1, refer to the foregoing descriptions of the "mode 1" in S210. Details are not described herein again.

According to the foregoing embodiment, the N pieces of configuration information may be used to determine that the mode of the terminal device is the mode 1. Because configuration information determined based on first information may be used to determine the mode of the terminal device, the first information may not carry information indicating mode transitions, to further reduce resource overheads in a communication system.

Optionally, the method 300 includes S320. Optionally, the method 200 includes S320.

S320: The terminal device performs the first data transmission with a first network device by using an NOMA technology. Correspondingly, the first network device performs the first data transmission with the terminal device by using the NOMA technology.

For example, the first data transmission may be an SDT. Optionally, S320 may be replaced with the following: The terminal device and the first network device perform the SDT by using the NOMA technology.

According to the foregoing embodiment, the network device may distinguish between data transmission of different terminal devices based on a non-orthogonal multiple access mechanism. In comparison with performing the first data transmission by using an OFDMA technology, the network device and the terminal device in this embodiment of this application occupy fewer resources when performing the first data transmission.

FIG. 4A and FIG. 4B are diagrams of resource configurations according to an embodiment of this application. It should be noted that FIG. 4A and FIG. 4B are merely examples, and do not constitute a limitation on this application.

Refer to FIG. 4A or FIG. 4B. Time-frequency resources are shown in a form of grids. A horizontal axis indicates time, and a vertical axis indicates a frequency. Each grid represents a different time-frequency resource. Different grids correspond to different time or frequencies. For example, the time-frequency resource may be a physical resource block (physical resource block, PRB).

Optionally, the N pieces of configuration information include information about a first resource. For example, the first resource may be represented by shadow grids in FIG. 4A or FIG. 4B.

Optionally, the first resource is used for the first data transmission. For example, the first resource may be used to transmit control plane and/or user plane data. For another example, the first resource may be used by the terminal device in the mode 1 to perform uplink or downlink data transmission.

Optionally, the first resource is shared by a plurality of terminal devices. For example, the first resource may be shared by all terminal devices in the mode 1 that are served by the first network device. All the terminal devices in the mode 1 that are served by the first network device may perform the first data transmission with the first network device on the first resource.

A name of the first resource is not limited in this application. For example, the first resource may be referred to as a default mode specific DL or UL physical layer protocol (physical layer protocol, PHY) channel resource or have another name.

Optionally, S320 may include: The terminal device performs the first data transmission with the first network device on the first resource by using the NOMA technology. Correspondingly, the first network device performs the first data transmission with the terminal device on the first resource by using the NOMA technology.

Optionally, the N pieces of configuration information include information about a first bearer. Optionally, the first bearer is a default bearer in the mode 1.

Optionally, the first bearer includes a signaling radio bearer (signaling radio bearer, SRB) and/or a data radio bearer (data radio bearer, DRB). For example, in the mode 1, both the SRB and the DRB may use the first bearer.

Optionally, the first bearer may include one or more sets of simplified configurations of a protocol-based physical channel, transmission channel, or logical channel.

A name of the first bearer is not limited in this application. For example, the first bearer may be referred to as a default radio bearer (radio bearer, RB) configuration common for any traffic/function (default RB configuration common for any traffic/function) or have another name.

Optionally, the N pieces of configuration information include information about a second resource. Optionally, the information about the second resource may be used to trigger uplink or downlink transmission. For example, the second resource may be used to transmit information for waking up the terminal device. For example, the information for waking up the terminal device may be a wake-up signal (wake up signal, WUS). For another example, the information for waking up the terminal device may be a low-power wake-up signal or a low-power downlink signal.

For example, the information about the second resource may include a cycle or a start offset.

It may be understood that, when the terminal device in the mode 1 has no data transmission task, the terminal device may sleep for energy saving. When the network device needs to send data or control signaling to the terminal device, the terminal device needs to be woken up in advance. Therefore, the information about the second resource is required.

A name of the information about the second resource is not limited in this application. For example, the information about the second resource may be referred to as a low-power DL or UL signal configuration or a low-power wake-up signal configuration, or have another name.

Optionally, the N pieces of configuration information include at least one of the information about the first resource, the information about the first bearer, or the information about the second resource. The N pieces of configuration information may be referred to as configuration information of the mode 1, minimum configuration information of the mode 1, configuration information for implementing the first data transmission, or minimum configuration information for implementing the first data transmission, or have another name.

For example, after the terminal device enters the mode 1, if the network device needs to send a small amount of downlink data, the network device may send a low-power DL signal to the terminal device based on the information about the second resource. The terminal device may receive the low-power DL signal based on the information about the second resource, to wake up the terminal device. The network device may send the downlink data via a configured physical resource (for example, the first resource) and the first bearer.

Optionally, the low-power DL signal carries downlink control information (downlink control information, DCI). The network device may send the downlink data via the first bearer and the configured physical resource (for example, the first resource) and/or a resource indicated by the DCI.

Optionally, after receiving the low-power DL signal, the terminal device sends a response signal of the low-power DL signal to the network device. Optionally, after receiving the response signal of the low-power DL signal, the network device sends the downlink data via the configured physical resource (for example, the first resource) and the first bearer.

For example, after the terminal device enters the mode 1, if the terminal device needs to send uplink data, the terminal device may send the uplink data via the configured physical resource (for example, the first resource) and the first bearer.

Because a capability required by the terminal device in the mode 1 for the first data transmission is weak, there may be a small quantity of configuration items. In a simple configuration manner, the terminal device in the mode 1 can have a capability of performing the first data transmission on a basis of energy saving. In other words, a capability of the terminal device in the mode 1 for uplink/downlink small data transmission may be supported by introducing a new configuration manner. In other words, in the foregoing solutions, the minimum configuration information required by the terminal device is provided in an effective and energy-saving manner, to support a procedure in which the terminal device in an energy-saving state implements small data transmission.

FIG. 5 is a schematic flowchart of still another communication method 500 according to an embodiment of this application. The method 500 may be combined with any embodiment of the method 200. For example, the method 500 may be performed after S220. The method 500 may alternatively be combined with any embodiment of the method 400. For example, the method 500 may be performed before or after the method 400. The following describes the method 500 with reference to FIG. 5.

Optionally, the method 500 includes S510. Optionally, the method 200 includes S510. Optionally, the method 400 includes S510.

S510: A terminal device determines, based on N pieces of configuration information, that a mode of the terminal device is a mode 2. Optionally, the mode 2 supports second data transmission.

For other descriptions of the mode 2, refer to the foregoing descriptions of the "mode 2" in S210. Details are not described herein again.

According to the foregoing embodiment, the N pieces of configuration information may be used to determine that the mode of the terminal device is the mode 2. Because configuration information determined based on first information may be used to determine the mode of the terminal device, the first information may not carry information indicating mode transitions, to further reduce resource overheads in a communication system.

Optionally, the method 500 includes S520. Optionally, the method 200 includes S520. Optionally, the method 400 includes S520.

S520: The terminal device performs the second data transmission with a first network device. Correspondingly, the first network device performs the second data transmission with the terminal device.

Optionally, the N pieces of configuration information include information about a third resource. For example, the third resource may be represented by blank (non-shaded) grids in FIG. 4A or FIG. 4B.

Optionally, the third resource is used for the second data transmission. For example, the third resource may be used to transmit control plane and/or user plane data. For another example, the first resource may be used by the terminal device in the mode 2 to perform uplink or downlink data transmission.

Optionally, the third resource is dedicated to (or exclusively occupied by) the terminal device. For example, the terminal device may exclusively occupy a PRB corresponding to the information about the third resource.

A name of the third resource is not limited in this application. For example, the third resource may be referred to as an enhanced or configurable mode specific DL or UL PHY channel resource or have another name.

Optionally, S520 includes: The terminal device performs the second data transmission with the first network device on the third resource. Correspondingly, the first network device performs the second data transmission with the terminal device on the third resource.

Optionally, the N pieces of configuration information include information about a second bearer. Optionally, the second bearer is a default bearer in the mode 2.

Optionally, the second bearer includes an SRB and/or a DRB. For example, in the mode 2, both the SRB and the DRB may use the second bearer.

Optionally, the second bearer may include one or more sets of simplified configurations of a protocol-based physical channel, transmission channel, or logical channel.

Optionally, in the mode 2, there are a plurality of second bearers. Different second bearers correspond to different control signaling and traffic. In other words, different second bearers are configured for different control signaling and traffic. For example, for different control signaling and traffic, SRBs and DRBs may be separately configured. It may be understood that, because configurations are separately performed for different control signaling or traffic, there are a small quantity of configuration items.

A name of the second bearer is not limited in this application. For example, the second bearer may be referred to as an enhanced/configurable mode radio bearer configuration for specific traffic/function (enhanced/configurable mode RB configuration for specific traffic/function) or may have another name.

In the foregoing embodiment, minimum configuration information required by the terminal device is provided in an effective and energy-saving manner, to support a procedure in which the terminal device in a high-performance state implements large data transmission of the terminal device. In other words, in a simple configuration manner, the terminal device can enter a large data transmission mode. In other words, in the foregoing solution, a capability of the terminal device to enter the large data transmission mode is supported by introducing a new configuration manner.

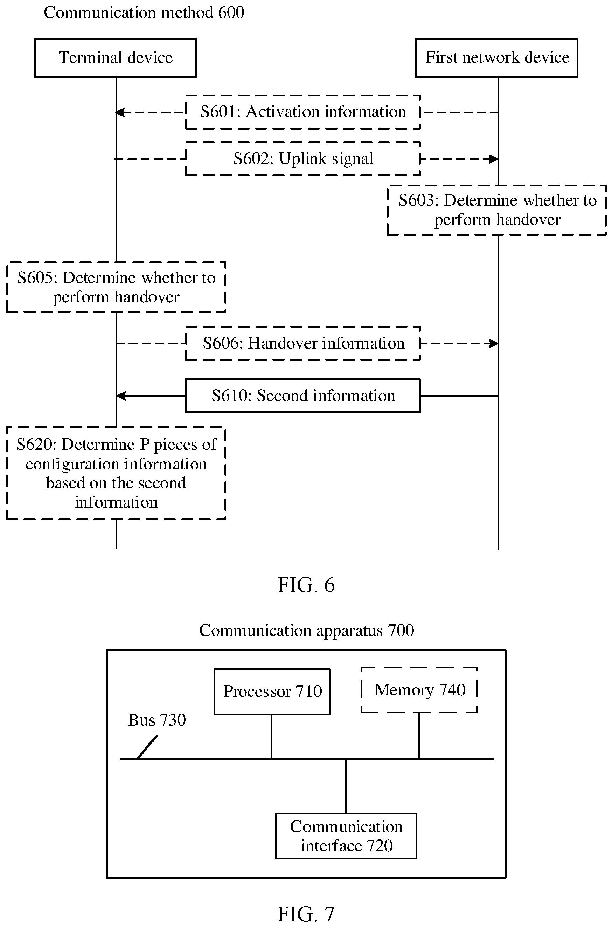

FIG. 6 is a schematic flowchart of still another communication method 600 according to an embodiment of this application. The method 600 may be combined with any embodiment of the method 200. For example, the method 600 may be performed after S220. The method 600 may alternatively be combined with any embodiment of the method 400 (or the method 500). For example, the method 600 may be performed before or after the method 400 (or the method 500). The following describes the method 600 with reference to FIG. 6.

S610: A terminal device receives second information from a first network device. Correspondingly, the first network device sends the second information to the terminal device.

Optionally, the method 200 includes S610. Optionally, the method 400 (or the method 500) includes S610.

The second information may be used to determine P pieces of configuration information in M pieces of configuration information, where P may be a positive integer less than or equal to M. The P pieces of configuration information may be configuration information of a second network device. For example, the P pieces of configuration information may include basic access information of the second network device, for example, an MIB of the second network device.

For other descriptions of the second information, refer to descriptions of the "first information" (for example, S210). A difference lies in that the first information may be used to determine the N pieces of configuration information in the M pieces of configuration information, and the N pieces of configuration information may be the configuration information of the first network device; and the second information may be used to determine the P pieces of configuration information in the M pieces of configuration information, and the P pieces of configuration information may be the configuration information of the second network device.

According to the foregoing embodiment, the network device may send the second information to the terminal device, and the second information is used by the terminal device to determine configuration information of another network device. The foregoing embodiment may be applied to a mobility management scenario. For example, the first network device may be used as a source network device, and the second network device may be used as a target network device. Therefore, the source network device enables, based on the second information with a small data amount, the terminal device to complete reconfiguration of the target network device, to reduce resource overheads for transmitting configurations of the target network device.

Optionally, the second information indicates a second index and/or a second condition. For descriptions of the second index and the second condition, refer to descriptions of the first index and the first condition (for example, S211, S212, and S213) respectively. A difference lies in that the first index and the first condition are used to determine the N pieces of configuration information, and the second index and the second condition are used to determine the P pieces of configuration information.

According to the foregoing embodiment, the second information may indicate an index and/or an application condition of configuration information. The terminal device performs reconfiguration based on the configuration information corresponding to the index. This can further reduce resource overheads in a communication system, to further save energy. The terminal device uses the corresponding configuration information based on the application condition, so that each set of configuration information can be applied in a more proper scenario. This further helps improve communication quality.

Optionally, S610 includes: The terminal device receives the second information from the first network device on a second resource. Correspondingly, the first network device sends the second information to the terminal device on the second resource.

For example, S610 is performed after S220. When the N pieces of configuration information include information about the second resource, the terminal device may receive the second information from the first network device on the second resource. Correspondingly, when the N pieces of configuration information include the information about the second resource, the first network device sends the second information to the terminal device on the second resource.

It should be noted that, in a related technical solution, reconfiguration cannot be performed based on the second resource. A reason is that in the related technical solution, the first network device sends specific configuration information, but only a small amount of data is usually sent on the second resource used to transmit information for waking up the terminal device. However, in this application, a data amount of the second information is small, and therefore reconfiguration may be performed based on the second resource.

According to the foregoing solution, the second information may be transmitted on the second resource used to transmit the information for waking up the terminal device, to improve utilization of the second resource and help save resources.

Before S610, the first network device or the terminal device may determine whether to perform handover (handover).

Optionally, the method 600 further includes S601 and S602. S601 and S602 are solutions in which the first network device determines whether to perform handover. Optionally, S601 and S602 may be performed when the first network device has a strong positioning sensing capability. The solutions of S601 and S602 may also be referred to as network-centric mobility management (network-centric mobility management).

S601: The first network device sends activation information to the terminal device.

Optionally, S601 includes: The first network device sends the activation information to the terminal device on the second resource. The activation information may be used to trigger the terminal device to send an uplink signal to the first network device, to assist the first network device in sensing a moving path of the terminal device.

S602: The terminal device sends the uplink signal to the first network device.

The first network device may assist, based on the uplink signal, in sensing the moving path of the terminal device.

It should be noted that S601 and S602 are optional solutions. In some other optional embodiments, the first network device continuously senses the moving path of the terminal device in another manner.

S603: The first network device determines whether to perform handover.

Optionally, S603 includes: The first network device determines, based on the movement path of the terminal device, whether to perform handover.

When the first network device determines to perform handover, the first network device sends indication information to the second network device, where the indication information indicates the terminal device to hand over to the second network device. Optionally, the second network device may determine, based on a load status of the terminal device served by the second network device, whether to allow the terminal device to hand over to the second network device. For example, the second network device may notify, based on the load status of the terminal device in a mode 1 served by the second network device, the first network device to reject the terminal device in the mode 1 to hand over to the second network device.

Optionally, when determining to perform handover, the first network device may synchronize context of the terminal device with the second network device. For example, the context of the terminal device includes status information of the terminal device, security information, capability information of the terminal device, and a logical connection identifier related to the terminal device.

Optionally, the first network device notifies the terminal device to perform handover. For example, the first network device notifies, on the second resource, the terminal device to perform handover. For another example, the first network device sends a low-power DL signal on the second resource, and the low-power DL signal indicates the terminal device to perform handover. In an optional implementation, after the low-power DL signal is sent, S610 is performed. In another optional implementation, the low-power DL signal includes the second information, that is, S610 is performed while the terminal device is indicated to perform handover.

Optionally, the method 600 further includes S605 and S606. S605 and S606 are solutions in which the terminal device determines whether to perform handover. Optionally, S605 and S606 may be performed when the first network device does not have a positioning sensing capability or has a weak positioning sensing capability. The solutions of S605 and S606 may also be referred to as UE-centric mobility management (UE-centric mobility management).

S605: The terminal device determines to perform handover.

For example, the terminal device determines, based on measurement information, to perform handover.

S606: The terminal device sends handover information to the first network device.

Optionally, S606 includes: The terminal device sends the handover information to the first network device on the second resource. The handover information may be used to notify the first network device to perform handover.

Optionally, the first network device may synchronize context of the terminal device with the second network device. For example, the context of the terminal device includes status information of the terminal device, security information, capability information of the terminal device, and a logical connection identifier related to the terminal device.

Optionally, S610 is performed. The P pieces of configuration information indicated by the second information in S610 may include all or some configuration information of the second network device. For example, the P pieces of configuration information may include a part of configuration information that may be determined based on the second index and/or the second condition in all configuration information of the second network device.

Optionally, the method 600 includes S620. Optionally, the method 200 includes S620. Optionally, the method 400 (or the method 500) includes S620.

S620: The terminal device determines the P pieces of configuration information in the M pieces of configuration information based on the second information.

For example, the P pieces of configuration information may be used to determine that the mode of the terminal device is the mode 1 or a mode 2.

Optionally, after the terminal device accesses the second network device, the method 600 includes: The terminal device receives at least one piece of configuration information from the second network device. For example, the P pieces of configuration information include a part of configuration information of the second network device, and the at least one piece of configuration information is another part of configuration information of the second network device. It may be understood that the second information may indicate some configuration information of the second network device, and the second network device may send remaining configuration information of the second network device. The "remaining configuration information" is configuration information in all configuration information that the second network device needs to apply to the terminal device other than the configuration information indicated by the second information.

The following describes apparatus embodiments corresponding to the method embodiments of this application. The following merely briefly describes apparatuses. For specific implementation steps and details of the solutions, refer to the foregoing method embodiments.

To implement functions in the method provided in this application, a communication apparatus may include a hardware structure and/or a software module, and the foregoing functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 7 is a block diagram of a communication apparatus 700 according to an embodiment of this application. The communication apparatus 700 includes a processor 710 and a communication interface 720. The processor 710 and the communication interface 720 may be connected to each other through a bus 730. The communication apparatus 700 may be a first network device, or may be a terminal device.

Optionally, the communication apparatus 700 may further include a memory 740. The memory 740 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 740 is used for related instructions and data. The memory 740 and the processor 710 may be integrated together or separately disposed.

The processor 710 may be one or more central processing units (central processing unit, CPU). When the processor 710 is one CPU, the CPU may be a single-core CPU or may be a multicore CPU. The processor 710 may be a signal processor, a chip, or another integrated circuit that can implement the method in this application, or may be a part of circuits configured to perform a processing function in the processor, chip, or integrated circuit. In addition, the communication interface 720 may alternatively be an input/output interface, and the input/output interface is configured to input or output signals or data; or may be an input/output circuit.

For example, the communication apparatus 700 is the terminal device, and the processor 710 is configured to: receive first information from the first network device; and determine N pieces of configuration information in M pieces of configuration information based on the first information, where M is an integer greater than or equal to 1, N is a positive integer less than or equal to M, the M pieces of configuration information are pre-configured, and the M pieces of configuration information are used to determine a mode of the terminal device.

For example, the communication apparatus 700 is the first network device, and the processor 710 is configured to send first information to the terminal device, where the first information is used to determine N pieces of configuration information in M pieces of configuration information, M is an integer greater than or equal to 1, N is a positive integer less than or equal to M, the M pieces of configuration information are pre-configured, and the M pieces of configuration information are used to transit a mode of the terminal device.

The foregoing content is merely used as example descriptions. The communication apparatus 700 is responsible for performing the method or steps related to the first network device or the terminal device in the foregoing method embodiments.

It may be understood that the communication interface 720 may also be referred to as a transceiver. The transceiver may include a transmitter and a receiver. The transmitter is configured to perform a sending operation, and the receiver is configured to perform a receiving operation. For example, the processor 710 is configured to control the transceiver to receive and/or send a signal.

It should be noted that the communication apparatus 700 may include the transmitter but not include the receiver. Alternatively, the communication apparatus 700 may include the receiver but not include the transmitter. This may specifically depend on whether the foregoing solution performed by the communication apparatus 700 includes a sending action and a receiving action.

The foregoing descriptions are merely examples. For specific content, refer to the content shown in the method embodiments. For implementation of the operations in FIG. 7, refer to corresponding descriptions in the method embodiments shown in FIG. 2 to FIG. 6.

For example, the communication apparatus 700 may be configured to perform the solutions shown in FIG. 2 to FIG. 6.

For example, the communication apparatus 700 is the first network device, and the communication interface 720 may be configured to receive first configuration information from a second network device, and send first information to the terminal device.

For example, the communication apparatus 700 is the terminal device, and the communication interface 720 may be configured to receive first information from the first network device.

For example, the communication apparatus 700 is a second network device, and the communication interface 720 may be configured to send first configuration information to the first network device, and send second indication information to the first network device.

For details of other implementations, refer to the detailed descriptions of the embodiments shown in FIG. 2 to FIG. 6. Details are not described herein again. It should be understood that a specific process in which the components perform the foregoing corresponding processes has been described in detail in the foregoing method embodiments. For brevity, details are not described herein again.

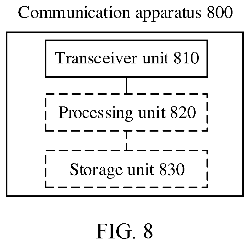

FIG. 8 is a block diagram of another communication apparatus 800 according to an embodiment of this application. The communication apparatus 800 may be a terminal device or a first network device, or may be a chip or a module in a terminal device or a first network device, and is configured to implement the method in the embodiments shown in FIG. 2 to FIG. 6. For details, refer to related descriptions in the foregoing method embodiments.

The communication apparatus 800 includes a transceiver unit 810. The following describes the transceiver unit 810 by using an example.

The transceiver unit 810 may include a sending unit and a receiving unit. The sending unit is configured to execute a sending action of the communication apparatus, and the receiving unit is configured to execute a receiving action of the communication apparatus. For ease of description, in embodiments of this application, the sending unit and the receiving unit are combined into one transceiver unit. Unified descriptions are provided herein, and details are not described again below. The transceiver unit 810 may be configured to implement a corresponding communication function. The transceiver unit 810 may also be referred to as a communication interface or a communication module.

It should be noted that the communication apparatus 800 may include the sending unit, but does not include the receiving unit. Alternatively, the communication apparatus 800 may include the receiving unit, but does not include the sending unit. This may specifically depend on whether the foregoing solution performed by the communication apparatus 800 includes a sending action and a receiving action.

For example, the transceiver unit 810 is configured to receive first information from the first network device.

Optionally, the communication apparatus 800 may further include a processing unit 820 configured to perform content related to steps such as processing and coordination of the communication apparatus 800.

For example, the transceiver unit 810 is configured to send first information to the terminal device.

Optionally, the communication apparatus 800 may further include a processing unit 820 configured to perform content related to steps such as processing and coordination of the communication apparatus 800.

The foregoing content is merely used as example descriptions. The communication apparatus 800 is responsible for performing the related method or steps in the foregoing method embodiments.

Optionally, the communication apparatus 800 further includes a storage unit 830. The storage unit 830 is configured to store a program or code used to perform the foregoing method. In other words, the storage unit 830 may be configured to store instructions and/or data, and the processing unit 820 may read the instructions and/or the data in the storage unit 830, to enable the communication apparatus 800 to implement the foregoing method embodiments. For example, the communication apparatus 800 may be configured to perform the solutions shown in FIG. 2 to FIG. 6.

For example, the processing unit 820 may be configured to: receive first information from the first network device; and determine N pieces of configuration information in M pieces of configuration information based on the first information, where M is an integer greater than or equal to 1, N is a positive integer less than or equal to M, the M pieces of configuration information are pre-configured, and the M pieces of configuration information are used to determine a mode of the terminal device.

For example, the processing unit 820 may be configured to send first information to the terminal device, where the first information is used to determine N pieces of configuration information in M pieces of configuration information, M is an integer greater than or equal to 1, N is a positive integer less than or equal to M, the M pieces of configuration information are pre-configured, and the M pieces of configuration information are used to transit a mode of the terminal device.

For details of other implementations, refer to the detailed descriptions of the embodiments shown in FIG. 2 to FIG. 6. Details are not described herein again. It should be understood that a specific process in which the components perform the foregoing corresponding processes has been described in detail in the foregoing method embodiments. For brevity, details are not described herein again.

When the communication apparatus is a chip, the chip includes a transceiver, a memory, and a processor. The transceiver may be an input/output circuit or a communication interface. The processor is a processor, a microprocessor, or an integrated circuit integrated on the chip. The sending operation of the first network device or the terminal device in the foregoing method embodiments may be understood as an output of the chip, and the receiving operation of the first network device or the terminal device in the foregoing method embodiments may be understood as an input of the chip.

This application further provides a chip. The chip includes a processor, configured to invoke instructions from a memory and run the instructions stored in the memory, to enable a communication apparatus on which the chip is mounted to perform the method in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or code.

This application further provides a processor configured to be coupled to a memory and configured to perform the method and functions of the communication or encoding apparatus in any one of the foregoing embodiments.

Another embodiment of this application provides a computer program product including a computer program or instructions. When the computer program product runs on a computer, the method in the foregoing embodiments is implemented.

This application further provides a computer program. When the computer program runs on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

This application further provides a communication system. The communication system includes a first network device and a terminal device. The first network device and the terminal device are respectively configured to indicate the method performed by the first network device and the terminal device in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely division into logical functions and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The storage medium includes various media that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a terminal device, and the method comprises:
receiving first information from a first network device; and
determining N pieces of configuration information in M pieces of configuration information based on the first information, wherein M is an integer greater than or equal to 1, N is a positive integer less than or equal to M, the M pieces of configuration information are pre-configured, and the M pieces of configuration information are used to determine a mode of the terminal device.

2. The method according to claim 1, wherein the first information indicates a first index, and the determining the N pieces of configuration information in the M pieces of configuration information based on the first information comprises:
determining the N pieces of configuration information in the M pieces of configuration information based on the first index.

3. The method according to claim 1, wherein the first information indicates a first condition, and the determining the N pieces of configuration information in the M pieces of configuration information based on the first information comprises:
when the first condition is met, determining the N pieces of configuration information in the M pieces of configuration information.

4. The method according to claim 1, wherein the first information indicates a first index and a first condition, and the determining the N pieces of configuration information in the M pieces of configuration information based on the first information comprises:
determining K pieces of configuration information in the M pieces of configuration information based on the first index, and when the first condition is met, determining the N pieces of configuration information in the K pieces of configuration information, wherein K is a positive integer less than or equal to M, and K is a positive integer greater than or equal to N; or
when the first condition is met, determining L pieces of configuration information in the M pieces of configuration information, and determining the N pieces of configuration information in the L pieces of configuration information based on the first index, wherein L is a positive integer less than or equal to M, and L is a positive integer greater than or equal to N.

5. The method according to claim 3 or 4, wherein the first condition comprises at least one of the following:
a condition of an identifier of the terminal device;
a condition of a capability category of the terminal device;
a threshold condition of a distance between the terminal device and the first network device;
a threshold condition of signal strength;
a threshold condition of a battery level of the terminal device;
a threshold condition of a quality of service level;
a condition of a data encryption manner;
a condition of a type of the first network device; or
a condition of a sensing capability of the first network device.

6. The method according to any one of claims 1 to 5, wherein the method further comprises:
determining, based on the N pieces of configuration information, that the mode of the terminal device is a mode 1, wherein the mode 1 supports at least one of first data transmission, mobility management, or initiation of second data transmission, and a transmission requirement of the first data transmission is different from a transmission requirement of the second data transmission.

7. The method according to claim 6, wherein the N pieces of configuration information comprise information about a first resource, and the method further comprises:
performing, on the first resource, the first data transmission with the first network device by using a non-orthogonal multiple access technology.

8. The method according to any one of claims 1 to 5, wherein the method further comprises:
determining, based on the N pieces of configuration information, that the mode of the terminal device is a mode 2, wherein the mode 2 supports second data transmission.

9. The method according to any one of claims 1 to 8, wherein the method further comprises:
receiving second information from the first network device; and
determining P pieces of configuration information in the M pieces of configuration information based on the second information, wherein P is a positive integer less than or equal to M, and the P pieces of configuration information are configuration information of a second network device.

10. The method according to claim 9, wherein the second information indicates a second index and/or a second condition.

11. The method according to claim 9 or 10, wherein one of the N pieces of configuration information comprises information about a second resource, the second resource is used to transmit information for waking up the terminal device, and the receiving the second information from the first network device comprises:
receiving the second information from the first network device on the second resource.

12. A communication method, wherein the method is applied to a first network device, and the method comprises:
sending first information to a terminal device, wherein the first information is used to determine N pieces of configuration information in M pieces of configuration information, M is an integer greater than or equal to 1, N is a positive integer less than or equal to M, the M pieces of configuration information are pre-configured, and the M pieces of configuration information are used to transit a mode of the terminal device.

13. The method according to claim 12, wherein the first information indicates a first index, and the first index is used to determine the N pieces of configuration information in the M pieces of configuration information.

14. The method according to claim 12, wherein the first information indicates a first condition, and the first condition is used to determine the N pieces of configuration information in the M pieces of configuration information when the first condition is met.

15. The method according to claim 12, wherein the first information indicates a first index and a first condition; and
the first index is used to determine K pieces of configuration information in the M pieces of configuration information, and the first condition is used to determine the N pieces of configuration information in the K pieces of configuration information when the first condition is met, wherein K is a positive integer less than or equal to M, and K is a positive integer greater than or equal to N; or
the first condition is used to determine L pieces of configuration information in the M pieces of configuration information when the first condition is met, and the first index is used to determine the N pieces of configuration information in the L pieces of configuration information, wherein L is a positive integer less than or equal to M, and L is a positive integer greater than or equal to N.

16. The method according to claim 14 or 15, wherein the first condition comprises at least one of the following:
a condition of an identifier of the terminal device;
a condition of a capability category of the terminal device;
a threshold condition of a distance between the terminal device and the first network device;
a threshold condition of signal strength;
a threshold condition of a battery level of the terminal device;
a threshold condition of a quality of service level;
a condition of a data encryption manner;
a condition of a type of the first network device; or
a condition of a sensing capability of the first network device.

17. The method according to any one of claims 12 to 16, wherein the N pieces of configuration information are used to determine that the mode of the terminal device is a mode 1, the mode 1 supports at least one of first data transmission, mobility management, or initiation of second data transmission, and a transmission requirement of the first data transmission is different from a transmission requirement of the second data transmission.

18. The method according to claim 17, wherein the N pieces of configuration information comprise information about a first resource, and the method further comprises:
performing, on the first resource, the first data transmission with the terminal device by using a non-orthogonal multiple access technology.

19. The method according to any one of claims 12 to 16, wherein the N pieces of configuration information are used to determine that the mode of the terminal device is a mode 2, and the mode 2 supports second data transmission.

20. The method according to any one of claims 12 to 19, wherein the method further comprises:
sending second information to the terminal device, wherein the second information is used to determine P pieces of configuration information in the M pieces of configuration information, P is a positive integer less than or equal to M, and the P pieces of configuration information are configuration information of a second network device.

21. The method according to claim 20, wherein the second information indicates a second index and/or a second condition.

22. The method according to claim 20 or 21, wherein one of the N pieces of configuration information comprises information about a second resource, the second resource is used to transmit information for waking up the terminal device, and the sending the second information to the terminal device comprises:
sending the second information to the terminal device on the second resource.

23. A communication apparatus, comprising at least one module or at least one unit configured to perform the method according to any one of claims 1 to 11.

24. A communication apparatus, comprising at least one module or at least one unit configured to perform the method according to any one of claims 12 to 22.

25. A communication apparatus, comprising a processor and a memory, wherein the memory stores a computer program or instructions, and the processor is configured to execute the computer program or the instructions, to enable the communication apparatus to perform the method according to any one of claims 1 to 11 or the method according to any one of claims 12 to 22.

26. A computer-readable storage medium, wherein the computer-readable storage medium stores a computer program or instructions, and when the computer program or the instructions are run on a computer, the method according to any one of claims 1 to 11 or the method according to any one of claims 12 to 22 is performed.

27. A computer program product, comprising computer program code, wherein when the computer program code is run, the method according to any one of claims 1 to 11 or the method according to any one of claims 12 to 22 is implemented.

28. A communication system, comprising a terminal device and a first network device, wherein the terminal device is configured to perform the method according to any one of claims 1 to 11, and the first network device is configured to perform the method according to any one of claims 12 to 22.
